# EUROPEAN PATENT SPECIFICATION

(11) **EP 0 945 303 B1**
(45) Date of publication and mention of the grant of the patent: **20.10.1999**
(21) Application number: 98102861.6
(22) Date of filing: 19.02.1998
(51) Int. Cl.: B60Q 1/14, F21M 3/24

(54) **An electronically controlled lighting system for automotive vehicles providing a selective light non-visible to counter traffic drivers**
Elektronische Beleuchtungssteuerung für Kraftfahrzeuge mit selektiver Lichtabblendung des entgegenkommenden Verkehrs für den Fahrer
Dispositif électronique de commande de l'éclairage d'un véhicule avec obturation sélective de l'éclairage du traffic opposé pour le conducteur

(43) Date of publication of application: 29.09.1999
(73) Proprietor: Szybicki, Edmund, CH-1217 Meyrin (CH)
(72) Inventor: Szybicki, Edmund, CH-1217 Meyrin (CH)

(56) References cited:
- WO-A-87/04396
- WO-A-92/14625
- DE-A- 3 916 897
- DE-A- 3 919 612
- FR-A- 2 076 250
- US-A- 4 286 308
- DATABASE WPI Section PQ, Week 8802 Derwent Publications Ltd., London, GB; Class Q16, AN 88-013564 XP002068062 & SU 1 316 873 A (LVOV FORESTRY INST)

## Description

The invention concerns an electronically controlled lighting system for automotive vehicles, such as automobiles, autobuses, trucks, etc., providing a selective light, non-visible (hence non-dazzling) to drivers of vehicles equipped with the system and travelling in opposite directions.

### BACKGROUND OF THE INVENTION

At the present state of art, for driving at night hours the vehicles are equipped with a lighting system consisting of reflector lamps having two positions, the so called low beam and high beam lights. The high beam lights provide good visibility at far distances and are essentially used on motorways where the speed of cars is relatively high. The high beam lights produce, however, a high degree of dazzling effect. Therefore, at meetings of counter traffic and in populated areas the drivers must switch over from high beam to low beam lights in order to avoid dazzling drivers travelling in opposite direction. The low beam lights provide indeed lesser degree of dazzling effect, but the visibility is less good and of shorter range. Still, the low beam lights are not completely free of the dazzling effect.

Thus, the present art of lighting for automotive vehicles produces dazzling when driving at night hours, aspecially when used in the high beam position. This results in discomfort, ocular problems, irritations and driving difficulties which may in the worst case even cause accidents.

In the past, several patents have been filed defining various lighting systems for automobiles with the aim to reduce the glare effect. One of them, the patent application DE 391 961 2 A1, published on 3.1.91 defines a lighting system wherein vehicles travelling in opposite directions use alternately their respective lights. It suggests each vehicle to be equipped with stroboscopic lamps, a liquid cristal screen and an electronic device. The use of lights is mutually coordinated by counter traffic vehicles by means of the electronic device. For the purpose of synchronization the electronic device is equipped with a radio receiver for coordination at larger distances and with a photo-sensitive receiver for coordination at short distances by means of lights from the counter traffic vehicle.

### DISCLOSURE OF THE INVENTION

The invention disclosed here is defined in claim 1 and eliminates completely the dazzling effect as it provides a light which is completely invisible to drivers of vehicles travelling, in opposite directions. Further embodiments of the invention are defined in the dependent claims.

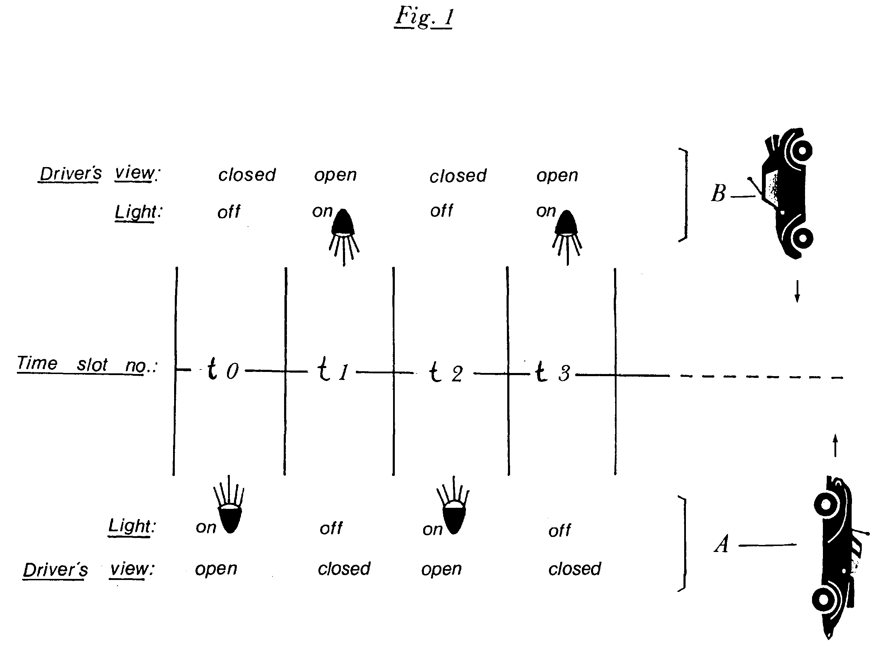

According to claim 1 of the invention, drivers of vehicles travelling in opposite directions use their respective lights on a time sharing basis. The lights are used alternately, in different, equidistant and mutually exclusive, interleaved time slots. Thus, for instance if time is divided into equidistant and consecutively numbered time slots, say t0,t1,t2,t3 ... etc., the vehicles travelling in one direction (e.g. A; Fig.1) emit their light and the drivers of these vehicles view the light only in say the even-numbered time slots t0,t2,t4, ... etc., while vehicles travelling in the opposite direction (B; Fig.1) emit their light and drivers of these vehicles see the light only in the odd-numbered set of time slots,t1,t3,t5, .... etc. Thus, the light beams generated by the respective vehicles travelling in opposite directions are separated in time. The vehicles are equipped with a lamp arrangement emitting intermittent light in the scheduled set of time slots and the drivers are equipped with an ocular arrangement which enables them to see the light emitted in their own vehicle and preventing them from seeing the light emitted by the counter traffic vehicles. The length of the time slots is sufficiently short and so the frequency of the lighting periods is sufficiently high, such that the respective drivers experience a continuous light.

According to further embodiments of the invention, an electronic device provided with a microprocessor and an oscillator clock controls the precise time slot generation and timely operation of the ocular arrangement and of the lamp arrangement emitting intermittent light. For proper operation of the lighting system the oscillator clocks in all vehicles are synchronized with a master clock. In order to prevent counter traffic vehicles to operate in the same set of time slots the electronic device has an arrangement allowing the drivers to switch the operation of their equipment from the even-numbered set of time slots to the odd-numbered set of time slots and "vice versa". Fig.1 depicts the principle of time being divided into equidistant time slots and the principle of alternate use of lights by vehicles travelling in opposite directions. Thus, the invention provides excellent visibility to each driver but the light emitted by the counter traffic vehicles is completely invisible to the respective drivers travelling in opposite directions. The invention disclosed here can be used in many applications, such as automobiles, autobuses, motorcycles, boats, trains, helicopters, etc.

The invention results in obvious advantages. It allows drivers of vehicles to use the high beam lights, also at meeting counter traffic without dazzling drivers travelling in the opposite direction and without being dazzled by counter traffic lights. Consequently, the system provides perfect visibility at far distances and at close range, improves driving comfort and reduces the risk for ocular problems and accidents.

### DESCRIPTION OF THE DRAWINGS

Fig.1 is a schematic showing the principle of time being divided into equidistant time slots and the principle of alternate use of lights on time sharing basis by vehicles travelling in opposite directions.
Fig.2 is a schematic showing the elements of the equipment unit required for each vehicle.

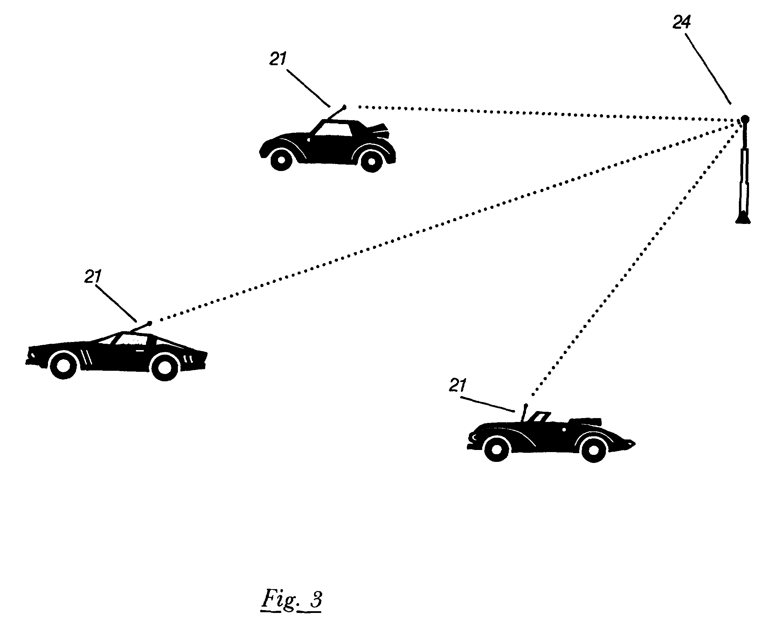

Fig.3 is a schematic showing the principle used to synchronize the operation of the lighting systems in all vehicles with a timing signal broadcasted from a master clock.

### PREFERRED EMBODIMENTS

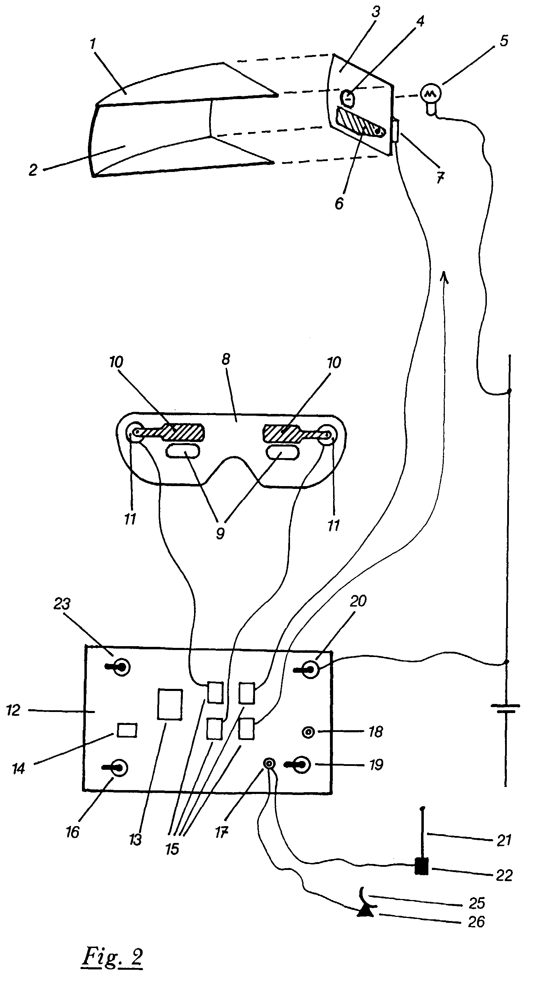

There are several ways to carry out the invention. Fig. 2 depicts one possible way of building the system and shows the equipment unit required for each vehicle. The equipment unit in this case consists of
- special reflector lamps (1) generating intermittent light;
- a special binocular (8) to be used by the driver;
- an alectronic device (12) for the control of timely operation of the lamps and of the binocular.

The reflector lamps (1) have a special design. The bulb (5) is still located in the focal point of the parabolic reflector (2), but is separated from the reflector by a solid screen (3). The screen is provided with a window (4) through which the bulb (5) emits light towards the reflector (2). In front of the window (4) there is a movable flap (6), which is operated by a relay (7) alternately closing and opening the window (4). In this way the reflector lamp (1) generates an intermittent light. Similarly, the binocular (8), to be used by the driver of the vehicle, has a special design. It has windows (9), through which the driver of the vehicle views, and flaps (10) operated by relays (11) alternately closing and opening the windows (9) and hence the driver's view.

The electronic device (12) comprises
- a preprogrammed microprocessor (13);
- an oscillator clock (14);
- relay drives (15);
- power ON/OFF switch (20);
- SLEEP/OPERATION switch (23);
- time slot set selection switch (16);
- inlet for reception of synchronization signal (17);
- outlet for transmission of synchronization signal (18);
- synchronization demand switch (19);
- pre-tuned antenna (21) and associated receiver (22) for reception of synchronization timing signal, centrally broadcasted from a master clock.

The microprocessor (13) includes a program of commands for activation of the relay drives (15), which in turn operate the relays (7) and (11). Using the oscillator clock (14) the microprocessor (13) maintains a precise time slot definition and controls that the flaps (6) and (10) close the windows (4) and (9) at the same time and open them at the same time and that this occurs in the scheduled set of time slots. The vehicle provided with the equipment unit generates light and its driver views the light in the "open" state only. During the "closed" period the driver does not see the light which may be generated by a counter traffic vehicle equipped with the same lighting system but operating in a different set of time slots. The frequency of the "open" periods is sufficiently high (ca 50 Hz), such that the viewers see a continuous light. The electronic device (12) is provided with a switch (16) enabling the driver to switch the operation of his equipment unit from the even-numbered set of time slots to the odd-numbered set of time slots and "vice versa". In fact, using the switch (16) the driver has the choice either to view the counter traffic light or not. It must also be noted that drivers will in all circumstances see the light emitted by lamps which are not connected to the system. Thus, position (parking) lights of vehicles can be made visible, which is good from the security point of view. For accurate operation of the lighting system the oscillator clock (14) of the equipment units in all vehicles must be synchronized. The microprocessor (13) includes a program routine to receive the synchronization signal over the inlet (17) and to perform synchronization of the oscillator clock (14) with a master clock. The synchronization is preferably done with the timing signal derived from the atomic clock at the German National Bureau of Standards. The signal is broadcasted from Frankfurt (24) and can be received in practically all parts of Europe. In this case the timing signal is received over a pretuned antenna (21) and associated receiver (22) which is connected to the inlet (17). The synchronization is in this case done with a certain frequency and automatically on a continuous basis without any intervention from the driver of the vehicle beeing necessary. As an additional feature, the microprocessor (13) has also a program routine transmitting with certain frequency a synchronization signal to the outlet (18). This signal can be used to synchronize oscillator clocks in other electronic devices. In this case the device to be synchronized must pick up the signal over its inlet (17) and the synchronization must be requested by activating its switch (19). The electronic device is also equipped with a power ON/OFF switch (20) and a SLEEP/OPERATION switch (23). The latter gives the driver of the vehicle the choice to put the system in OPERATION or into a SLEEP state once the power is ON and whenever convenient, for reduced power consumption.

In Fig.2 only one reflector lamp is shown. The electronic device (12), however, can drive and control several lamps at the same time.

As an alternative, a stroboscopic type of flash tube providing intermittent light can be used instead of the reflector lamp (1). In that case the frequency and the timing of flashes is determined by the microprocessor (13) and operated by an appropriate drive. The invention is principally applicable to high beam lights and hence to driving on rural roads and on motorways at higher speeds when the visibility of further reach is of importance and high beam light is required. The invention, however, can be used in the high beam as well as in the low beam positions. Thus, in populated areas, cities, villages and communities the vehicles will be using the invention in the low beam position and those who do not have access to the invention will experience the light in the same way as the present state of art light.

Two prototype units of the invention have been built in accordance with the description above. All tests have been completed and have fully confirmed the operational objectives and expectations of the system.

## Claims

1. An electronically controlled lighting system for automotive vehicles providing means used by at least a first driver and a second driver of respectively at least a first vehicle (A) and a second vehicle (B) travelling in opposite directions to use their respective lights on time sharing basis, alternately in different, mutually exclusive, and equidistant time slots (t0, t1, t2, t3, etc) corresponding to a frequency of light periods, such that the first vehicle (A) traveling in one direction emit its light and the first driver of the first vehicle view this light only in, for example, the even-numbered set of time slots (t0, t2, etc) while the second vehicle (B) travelling in the opposite direction emit its light and the second driver of the second vehicle view this light only in, for example, the odd- numbered set of time slots (t1, t3, etc), such that the two light beams of the first vehicle and the second vehicle traveling in opposite directions are in separated time slots;
wherein the length of the time slots is maintained sufficiently short and so the frequency of the light periods is sufficiently high, such that each of the drivers of the vehicles experiences a continuous light emitted by his own vehicle only and do not see the light emitted by the vehicle travelling in the opposite direction (Fig.1);
the system including an equipment unit installed in each vehicle, comprising
a special lamp arrangement (1),
a special ocular arrangement for the driver of the vehicle (8),
an electronic device (12),
wherein the special lamp arrangement (1) alternately turns on and off the light, providing in this way an intermittent light, and the ocular arrangement alternately enabling the driver's view when the light in his vehicle is turned on and obstructing his view when the light in his vehicle is turned off;
said electronic device (12) being provided with an oscillator clock (14) for the control of the precise time slot definition, and the timely operation of the lamp arrangement and of the ocular arrangement, such that the driver's view is opened and the light is turned on in the same set of time slots; and
**characterized in that**
the electronic device (12) has a feature (16) enabling the drivers of the vehicles to change the operation of the equipment unit from the even-numbered set of time slots to the odd-numbered set of time slots, and "vice versa"; and
the oscillator clock (14) of the electronic device is synchronized in all vehicles, as frequently as required, with a central master clock (24), such that the equipment units in all vehicles continuously operate using the same time slot definition.

2. A lighting system as defined in claim 1, characterized in that the lamp arrangement consists of a reflector lamp (1), composed of a parabolic reflector (2), a light emitting bulb (5) placed in the focus of the reflector (2) and a screen arrangement (3) provided with a window (4) and placed between the bulb (5) and the reflector (2), such that the light is emitted through the window (4) towards the reflector (2);
and wherein the screen arrangement(3) is provided with a relay (7) which is controlled by the electronic device (12) and which operates the flap (6) alternately closing and opening the window (4), such that the reflector lamp (1) produces an intermittent light in the set of time slots as determined by the electronic device (12).

3. A lighting system as defined in claim 2, characterized in that the ocular arrangement consists of a binocular (8) provided with windows (9) for viewing, and relays (11) which are controlled by the electronic device (12) and which operate the flaps (10) alternately closing and opening the windows (9) for viewing in the set of time slots as determined by the electronic device (12).

4. A lighting system as defined in claim 3, characterized in that the electronic device (12) comprises,
a preprogrammed microprocessor (13);
an oscillator clock (14);
relay drives (15);
a power ON/OFF switch (20);
a device OPERATION/SLEEP switch (23);
a time slot set selection switch (16);
a synchronization demand switch (19);
an inlet (17) to the microprocessor (13) for the reception of synchronization timing signal;
an outlet (18) from the microprocessor (13) for the transmission of synchronization timing signal;
wherein the microprocessor (13) is provided with a program routine defining precisely the time schedule for the even-numbered time slots and for the odd-numbered time slots and the time schedule for commands to be sent to the respective relay drives (15) for timely operation of the light generating lamps (1) and the binocular (8) and comprises program routines for the reception and execution of operational commands to be activated by the driver of the vehicle by means of the switches (16,19,20,23);
and wherein the said time slot set selection switch (16) gives the driver of the vehicle the choice, to operate the equipment unit either in the even-numbered set of time slots or in the odd-numbered set of time slots (Fig. 1) and the said device OPERATION/SLEEP switch (23) gives the driver of the vehicle the choice, once the power switch (20) is on, either to put the equipment unit in operation or into a sleep state for reduced power consumption;
said microprocessor (13) being provided with a program routine for the reception of timing signal from the master clock through the inlet (17) and further has a program routine for the synchronization of the oscillator clock (14) with the master clock;
and wherein the electronic device (12), is transmitting with a certain frequency, a synchronization signal through the outlet (18) for the purpose of synchronizing oscillator clocks (14) of equipment units in other vehicles, in which case the synchronization must be requested using the switch (19) of the electronic device to be synchronized.

5. A lighting system as defined in claim 4, characterized in that the special reflector lamp (Fig.2) is replaced by a stroboscopic type of flash tube providing an intermittent light in the set of time slots as determined by the electronic device (12).

6. A lighting system as defined in claims 4 or 5, characterized in that the oscillator clock (14) of the electronic device (12) is synchronized with the central timing signal broadcasted from Frankfurt (24) by the German National Bureau of Standards, in which case the timing signal is received by the microprocessor (13) over a pretuned antenna (21) and associated receiver (22) connected to the inlet (17) of the electronic device (12).

7. A lighting system as defined in claims 4 or 5, characterized in that the oscillator clock (14) of the electronic device (12) is synchronized by means of a central timing signal transmitted over satellite, in which case the timing signal is received by the microprocessor (13) over a special satellite antenna (25) and associated receiver (26) connected to the inlet (17) of the electronic device (12).

8. A lighting system as defined in claims 1 to 7, characterized in that its application extends to vehicles, such as automobiles, autobuses, trucks, trains, motorcycles, boats and helicopters.

## Patentansprüche

1. Ein elektronisch gesteuertes Beleuchtungssystem für Kraftfahrzeuge, bei welchem Mittel vorgesehen sind, die mindestens von einem ersten Fahrer und einem zweiten Fahrer, beziehungsweise mindestens von einem ersten Fahrzeug (A) und einem zweiten, sich in entgegengesetzter Richtung bewegenden Fahrzeug (B) benutzt werden, um ihre jeweilige Lichter auf "time-sharing" Basis zu benutzen, abwechselnd in unterschiedlichen, sich gegenseitig ausschliessenden und gleichen Zeitintervallen (t0,t1,t2,t3, usw.) entsprechend einer Frequenz von Lichtperioden, so dass das erste Fahrzeug (A), welches in einer Richtung sein Licht aussendet, und der erste Fahrer des ersten Fahrzeugs sieht nur dieses Licht, z.B. in den geraden Zeitintervallen (t0,t2, usw.), während das zweite, in die entgegengesetzte Richtung fahrende Fahrzeug (B) sein Licht aussendet, und der zweite Fahrer des zweiten Fahrzeugs dieses Licht nur in den z.B. ungeraden Zeitintervallen sieht (t1,t3, usw.), so dass die zwei Lichtstrahle, des ersten und des zweiten gegeneinanderenfahrenden Fahrzeugen, sich in getrennte Zeitintervallen befinden;
wobei die Länge des Zeitintervalls kurz genug gehalten ist und somit die Frequenz der Lichtperiode genügend hoch ist, so dass jeder Fahrer der Fahrzeuge ein kontinuierliches Licht, das nur von seinem eigenen Fahrzeug ausgesendet wird, wahrnimmt und nicht das Licht des in die entgegengesetzte Richtung fahrenden Fahrzeugs (Fig.1);
das Beleuchtungssystem, schliesst eine Ausrüstungseinheit ein, die in jedem Fahrzeug eingesetzt ist zusammengesetzt aus
einer speziellen Lampenanordnung (1),
einer speziellen optischen Einrichtung für den Fahrer des Fahrzeugs (8),
eine elektronische Vorrichtung (12),
wobei die spezielle Lampenanordnung (1) das Licht wechselweise ein- und ausschaltet, und somit ein gepulstes Licht erzeugt, und die optische Einrichtung abwechselnd die Sicht des Fahrers ermöglicht, wenn das Licht seines Fahrzeugs eingeschaltet ist, und die Sicht des Fahrers blockiert, sobald das Licht seines Fahrzeugs ausgeschaltet ist;
die genannte elektronische Vorrichtung (12) ist mit einer Oszillatoruhr (14) versehen für die Kontrolle der genauen Definition der Zeitinterinalle und des zeitgenauen Betriebs der Lampen und der optischen Anordnung, so dass die Sicht des Fahrers frei ist und das Licht eingeschaltet ist in der selben Anordnung von Zeitintervallen; und gekennzeichnet dadurch, dass
die elektronische Vorrichtung (12) eine Anordnung (16) enthält, die den Fahrern der Fahrzeuge erlaubt die Funktion der Ausrüstungseinheit von den geraden zu den ungeraden Zeitintervallen und umgekehrt zu ändern;
und die Oszillatoruhr (14) der elektronischen Vorrichtung in allen Fahrzeugen synchronisiert ist, so oft wie benötigt, mit einer Zentraluhr (24), so dass die Ausrüstungseinheiten in allen Fahrzeugen ununterbrochen funktionieren mit der gleichen Zeitintervalls Definition.

2. Ein Beleuchtungssystem gemäss Anspruch 1, dadurch gekennzeichnet, dass die Lampenanordnung aus einer Reflektorlampe (1) besteht, die einen parabolischen Reflektor (2) umfasst, eine Licht aussendende Glühbirne (5), plaziert im Brennpunkt des Reflektors (2), und eine Abschirmanordnung (3) versehen mit einem Fenster (4) plaziert zwischen der Glühbirne (5) und dem Reflektor (2), so dass das Licht durch das Fenster (4) in Richtung des Reflektors (2) erzeugt wird; und
wobei die Abschirmanordnung (3) mit einem Relais (7) versehen ist, das durch die elektronische Vorrichtung (12) kontrolliert wird und die Klappe (6) in Betrieb setzt, welche wechselweise das Fenster (4) schliesst und öffnet, so dass die Reflektorlampe (1) ein gepulstes Licht produziert innerhalb der durch die elektronische Vorrichtung (12) bestimmten Zeitintervalle.

3. Ein Beleuchtungssystem gemäss Anspruch 2, dadurch gekennzeichnet, dass die optische Anordnung aus einem Binokular (8) besteht, ausgestattet mit Fenstern (9) zum Sehen und Relais (11), die durch die elektronische Vorrichtung (12) kontroliert werden und die die Klappen (10) in Betrieb setzen, welche abwechselnd die Fenster (9) zum Sehen öffnen und schliessen, innerhalb der durch die elektronische Vorrichtung (12) bestimmten Zeitintervalle.

4. Ein Beleuchtungssystem gemäss Anspruch 3, dadurch gekennzeichnet, dass die elektronische Vorrichtung (12) umfasst:
einen vorprogrammierten Mikroprozessor (13);
eine Oszillatoruhr (14);
Relaistreiber (15);
einen Spannungs EIN/AUS Schalter (20);
einen elektronischen Vorrichtungs BETRIEB/RUHE Schalter (23);
einen Schalter für die Wahl des Zeitintervalls (16);
einen Schalter für die Anforderung der Synchronisation (19);
einen Eingang (17) zum Mikroprozessor (13) für den Empfang der Synchronisationszeitsignale;
einen Ausgang (18) vom Mikroprozessor (13) für die Übertragung der Synchronisationszeitsignale;
wobei der Mikroprozessor (13) mit einer Programmroutine versehen ist für die genaue Definition des Zeitplans der geraden und ungeraden Zeitintervalle, sowie den Zeitplan für Befehle, die an die entsprechenden Relaistreiber (15) zu senden sind, für die zeitgerechte Funktion der lichterzeugenden Lampen (1) und des Binokulars (8) und enthält Programmroutinen für den Empfang und die Ausführung der Betätigungsbefehle, die von dem Fahrer des Fahrzeugs mittels der Schalter (16,19,20,23) aktiviert werden; und
wobei der genannte Schalter für die Wahl der Zeitinterivalle (16) dem Fahrer des Fahrzeugs die Möglichkeit gibt, entweder innerhalb der geraden oder innerhalb der ungeraden Zeitintervalle die Ausrüstungseinheit in Betrieb zu setzen (Fig.1) und die genannte Vorrichtung BETRIEB/RUHE Schalter (23) lässt dem Fahrer des Fahrzeugs die Wahl, sobald der Schalter (20) an ist, entweder die Ausrüstungseinheit in Betrieb zu nehmen oder in den Ruhezustand zu versetzen, um den Stromverbrauch zu reduzieren;
und der genannte Mikroprozessor (13) mit einer Programmroutine ausgerüstet ist, um durch den Eingang (17) Zeitsignale von der Zentraluhr zu empfangen, und ausserdem eine Programmroutine hat, um die Oszillatoruhr (14) mit der Zentraluhr zu synchronisieren;
und wobei die elektronische Vorrichtung (12) mit einer gewissen Frequenz durch den Ausgang (18) ein Synchronisationssignal überträgt, um die Oszillatoruhren (14) der Ausrüstungseinheiten in anderen Fahrzeugen zu synchronisieren, und in diesem Fall muss die Synchronisierung angeordnet werden durch den Schalter (19) der elektronischen Vorrichtung zu Synchronisierung.

5. Ein Beleuchtungssystem gemäss Anspruch 4, dadurch gekennzeichnet, dass die specielle Reflektorlampe (Fig.2) durch eine stroboskopische Type der Blitzröhre ersetzt ist, die ein gepulstes Licht erzeugt innerhalb der durch die elektronische Vorrichtung (12) bestimmten Zeitintervalle.

6. Ein Beleuchtungssystem gemäss Anspruch 4 oder 5, dadurch gekennzeichnet, dass die Oszillatoruhr (14) der elektronischen Vorrichtung (12) mit der zentrale Zeitsignale übertragenden Physikalisch-Technischen Bundesanstalt in Frankfurt (Deutschland) (24) synchronisiert ist, wobei das Zeitsignal vom Mikroprocessor (13) empfangen wird über eine vorabgestimmte Antenne (21) und dem dazugehörigen Empfänger (22), der mit dem Eingang (17) der elektronischen Vorrichtung (12) verbunden ist.

7. Ein Beleuchtungssystem gemäss Anspruch 4 oder 5, dadurch gekennzeichnet, dass die Oszillatoruhr (14) der elektronischen Vorrichtung (12) mit der zentrale Zeitsignale übertragenden Satelliten synchronisiert ist, wobei das Zeitsignal vom Mikroprozessor (13) empfangen wird über eine spezielle Satelliten-Antenne (25) und dem dazugehörigen Empfänger (26), der mit dem Eingang (17) der elektronischen Vorrichtung (12) verbunden ist.

8. Ein Beleuchtungssystem gemäss Anspruch 1 bis 7, dadurch gekennzeichnet, dass sich seine Anwendung auf Fahrzeuge erstreckt wie z.B. Personwagen, Autobusse, Lastkraftwagen, Züge, Motorfahrräder, Boote und Hubschrauber.

## Revendications

1. Un système d'éclairage à commande électronique pour véhicules automobiles fournissant des moyens, utilisés par au moins un premier conducteur et un second conducteur respectivement au moins d'un premier véhicule (A) et d'un second véhicule (B) circulant dans des directions opposées, leur permettant de se servir de leur éclairage respectif en partage de temps, de manière alternative dans des intervalles de temps differents, mutuellement exclusifs et equidistants (t0,t1,t2,t3, etc) correspondant à une fréquence de périodes d'éclairage telle que le premier véhicule (A) circulant dans une direction émet sa lumière et que le premier conducteur du premier véhicule ne voit cette lumière, que par example, dans les intervalles de temps pair (t0,t2, etc) pendant que le second véhicule (B) circulant dans la direction opposée émet sa lumière et le second conducteur du second véhicule ne voit cette lumière que, par example, dans les intervalles de temps impairs (t1,t3, etc) de sort que les deux faisceaux de lumière du premier et du second véhicule circulant dans des directions opposées se trouvent dans des intervalles de temps séparés;
où la longeur des intervalles de temps est maintenue suffisamment court et de ce fait la fréquence des périodes d'éclairage est suffisamment élevée de sort que chacun des conducteurs des véhicules ne pereçoit qu'une lumière continue, émise par son propre véhicule et ne voit pas la lumière émise par le véhicule circulant dans la direction opposée (Fig.1);
le système incluant un équipement installé dans chacun des véhicules et comprenant
un arrangement spécial de lampes (1),
un arrangement oculaire spécial pour le conducteur du véhicule (8),
un dispositif électronique (12),
où l'arrangement spécial de lampes (1) enclanche et déclanche alternativement l'éclairage fournissant ainsi une lumière intermittente, et l'arrangement oculaire permettant alternativement au conducteur de voir quand la lumière de son véhicule est allumée et lui bouchant la vue lorsque la lumière de son véhicule est éteinte;
ledit dispositif électronique (12) étant équipe d'une horloge à oscillateur (14) pour la commande de la définition précise de l'intervalle de temps, et l'opération précise de l'arrangement de lampes et de l'arrangement oculaire de façon telle que la vue du conducteur soit ouverte et l'éclairage enclanché dans les mêmes intervalles de temps; et caractérisé en ce que
le dispositif électronique (12) possède un arrangement (16) permettant aux conducteurs des véhicules de changer l'opération de l'équipement des intervalles de temps pairs aux intervalles impairs, et "vice versa"; et
l'horloge à oscillateur (14) du dispositif électronique est synchronisée dans tous les véhicules aussi fréquemment que nécessaire avec une horloge mère centrale (24) de façon que les équipements de tous les véhicules fonctionnent de manière continue en se référant à la même définition des intervalles de temps.

2. Un système d'éclairage tel que défini dans la revendication 1, caractérisé en ce que l'arrangement de lampe consiste en une lampe à réflecteur (1), composée d'un réflecteur parabolique (2), d'une ampoule (5) placée au foyer du réflecteur (2), et d'un arrangement d'écran (3) percé d'une fenêtre (4) et placé entre l'ampoule (5) et le réflecteur (2) de façon telle que la lumière est émise à travers la fenêtre (4) vers le réflecteur (2);
et où l'arrangement d'écran (3) est muni d'un relais (7) qui est piloté par le dispositif électronique (12) et qui agit sur le clapet (6) fermant et ouvrant alternativement la fenêtre (4) de façon que la lampe à réflecteur (1) produit une lumière intermittente dans les intervalles de temps déterminés par le dispositif électronique (12).

3. Un système d'éclairage tel que défini dans la revendication 2, caractérisé en ce que l'arrangement oculaire consiste en un binoculaire (8) muni de fenêtres (9) pour voir, et de relais (11) qui sont pilotés par le dispositif électronique (12) et qui agissent sur les clapets (10) fermant et ouvrant alternativement les fenêtres (9) pour voir pendant les intervalles de temps déterminés par le dispositif électronique (12).

4. Un système d'éclairage tel que défini dans la revendication 3, caractérisé en ce que le dispositif électronique (12) comprend,
un microprocesseur préprogrammé (13);
une horloge à oscillateur (14);
des pilotes de relais (15);
un commutateur MARCHE/ARRET (20);
un commutateur FONCTION/VEILLE (23);
un commutateur de sélection des intervalles de temps (16);
un commutateur de commande de synchronisation (19);
une entrée (17) dans le microprocesseur (13) pour la réception du signal de synchronisation;
une sortie (18) du microprocesseur (13) pour la transmission du signal de synchronisation;
où le microprocesseur (13) possède un logiciel qui définit précisément la cadence des intervalles de temps pairs et impairs et des commandes à envoyer aux pilotes de relais respectifs (15) pour l'operation précise des lampes à réflecteur (1) et du binoculaire (8) et comprend un logiciel pour la réception et l'exécution de commandes actionnées par le conducteur du véhicule au moyen des commutateurs (16,19,20,23);
et où ledit commutateur de sélection des intervalles de temps (16) donne au conducteur du véhicule le choix de faire fonctionner l'équipement soit dans les intervalles de temps pairs soit dans les intervalles impairs (Fig.1) et ledit commutateur FONCTION/VEILLE (23) donne au conducteur du véhicule le choix, lorsque le commutateur principal (20) est sur MARCHE, soit de mettre l'équipement en fonction ou en état de veille pour réduire la consommation d'énergie;
ledit microprocesseur (13) possédant un logiciel pour la réception du signal de synchronisation en provenance de l'horloge mère par l'entrée (17) et possède en outre un logiciel pour la synchronisation de l'horloge à oscillateur (14) avec l'horloge mère;
et où le dispositif électronique (12) transmet, à une certaine fréquence, un signal de synchronisation par la sortie (18) pour synchroniser les horloges à oscillateur (14) de l'équipement des autres véhicules, auquel cas la synchronisation doit se faire par l'emploi du commutateur (19) du dispositif électronique à synchroniser.

5. Un système d'éclairage tel que défini dans la revendication 4, caractérisé en ce que la lampe spéciale à réflecteur (Fig.2) est remplacée par une lampe flash de type stroboscopique émettant une lumière intermittente dans les intervalles de temps déterminés par le dispositif électronique (12).

6. Un système d'éclairage tel que défini dans les revendications 4 ou 5, caractérisé en ce que l'horloge à oscillateur (14) du dispositif électronique (12) est synchronisée par le signal de cadence central émis par le "Physikalisch-Technische Bundesamt" de Frankfurt, Allemagne (24), auquel cas le signal de cadence est reçu par le microprocesseur (13) sur une antenne préaccordée (21) et le récepteur associé (22), connecté à l'entrée (17) du dispositif électronique (12).

7. Un système d'éclairage tel que défini dans les revendications 4 ou 5, caractérisé en ce que l'horloge à oscillateur (14) du dispositif électronique (12) est syncronisée par un signal de cadence central transmis par satellite, auquel cas le signal de cadence est reçu par le microprocesseur (13) sur une antenne spéciale de satellite (25) et le récepteur associé (26) connecté à l'entrée (17) du dispositif électronique (12).

8. Un système d'éclairage tel que défini dans les revendications 1 à 7, caracterisé en ce que son application s'étend aux véhicules, tels qu'automobiles, autobus, camions, trains, motocyclettes, bateaux et hélicoptères.
